# EUROPÄISCHE PATENTSCHRIFT

(11) **EP 2 182 378 B1**
(45) Veröffentlichungstag und Bekanntmachung des Hinweises auf die Patenterteilung: **18.07.2012**
(21) Anmeldenummer: 08105704.4
(22) Anmeldetag: 30.10.2008
(51) Int. Cl.: G01S 7/487, G01S 7/497, G01S 7/483, G01S 17/10, G01S 17/08

(54) **Entfernungsmessender Laserscanner**
Laser scanner to measure distance
Scanner laser mesurant l'éloignement

(43) Veröffentlichungstag der Anmeldung: 05.05.2010
(73) Patentinhaber: SICK AG, 79183 Waldkirch (DE)
(72) Erfinder: Pastor, Sebastian, 79104, Freiburg (DE); Schopp, Thomas, 79112, Freiburg (DE); Zienkiewicz, Jacek, 79098, Freiburg (DE)
(74) Vertreter: Hehl, Ulrich

(56) Entgegenhaltungen:
- EP-A- 1 291 673
- DE-A1- 4 340 756
- US-A1- 2006 119 833

## Beschreibung

Die Erfindung betrifft einen entfernungsmessenden Laserscanner sowie ein Verfahren zur Erfassung von Entfernungen mittels eines Laserscanners nach dem Oberbegriff von Anspruch 1 beziehungsweise 11.

Laserscanner können eingesetzt werden, um Abstände oder Entfernungen in einem Überwachungsbereich zu bestimmen. Dazu wird die Lichtlaufzeit zwischen Aussenden und Empfang eines Lichtsignals ausgewertet, das von einer Oberfläche in dem Überwachungsbereich remittiert oder reflektiert wird.

Man unterscheidet zwei Verfahren, nämlich Pulslaufzeitverfahren und Phasenverfahren. In Pulslaufzeitverfahren werden einzelne kurze Lichtpulse ausgesandt und deren Laufzeit anhand eines Charakteristikums des Pulses, beispielsweise dessen Maximum bestimmt. Bei einem Phasenverfahren wird das Licht amplitudenmoduliert und die Phasenverschiebung des ausgesandten gegenüber dem empfangenen Licht ausgewertet. Phasenverfahren haben zunächst einen durch die verwandte Modulationsfrequenz des Lichts begrenzten Eindeutigkeitsbereich, der aber durch zusätzliche Maßnahmen erweitert werden kann. Mit beiden Verfahren erhält man jeweils den Abstandswert zu dem aktuellen Scanpunkt.

Mit Hilfe einer Scanbewegung, die häufig über bewegliche Ablenkelemente, beispielsweise einen Drehspiegel realisiert wird, können Scanlinien und damit Abstandsprofile ermittelt werden. Ist auch noch eine Bewegung in der Querrichtung zu der Scanlinie vorgesehen, etwa durch einen weiteren Ablenkmechanismus oder eine Relativbewegung durch Anbringung des Scanners an einem Fahrzeug oder über einem Förderband oder einer Straße, so können dreidimensionale Höhenkarten aufgezeichnet werden.

Ein herkömmliches Verfahren für die Laufzeitmessung besteht darin, beim Aussenden eines Laserpulses einen Zähler zu starten, der dann gestoppt wird, wenn das Echo, also ein von einem Objekt reflektiertes oder remittiertes Empfangssignal, eine vordefinierte Schwelle überschreitet. Der Zählerstand ist dann direkt proportional der Entfernung zu dem Objekt.

Die Messgenauigkeit dieses Verfahrens genügt häufig nicht. Unterschiedliche Dämpfungen durch die optischen Eigenschaften der Oberfläche am Ort der Reflexion führen dazu, dass trotz identischer Entfernung die Schwelle früher oder später überschritten wird. Man kann dies beispielsweise durch Einbeziehung der Pulsbreite oder Gesamtenergie des Pulses wieder korrigieren, aber dazu muss diese Information über den Empfangspuls gewonnen werden.

Hinzu kommen momentane Störeinflüsse wie Nebel, Verzerrungen, Rauschen oder Fremdlichteinflüsse, welche den Empfangspuls deformieren und damit die Laufzeitbestimmung verfälschen können. Auch stammt der erste Empfangspuls, bei dem der Zähler stoppt, nicht unbedingt von dem Objekt, dessen Entfernung bestimmt werden soll. Weitere Empfangspulse können etwa durch teiltransparente Flächen, Glasscheiben oder Regentropfen entstehen. Man kann hierfür zusätzliche Zähler einsetzen, aber das Verfahren wird dann aufwändig und behebt nicht die Probleme mit Messfehlern durch veränderte Empfangspulsformen.

Nach einem ähnlichen Prinzip zur Auswertung von mehreren Empfangspulsen wie dem soeben beschriebenen arbeitet ein Sensor gemäß DE 103 13 709 B4. Dabei wird der Zählerstand bei Schwellüberschreitung nur abgespeichert, dann aber weitergezählt, um auch die Zählerstände zu den Schwellüberschreitungen weiterer Empfangspulse zu bestimmen. Anschließend wird beispielsweise anhand der Reihenfolge oder einer Amplitudenbewertung entschieden, welcher der Empfangspulse für die Laufzeitbestimmung verwendet wird. Auch bei diesem Vorgehen entstehen Messfehler wegen nicht hinreichend genauer Lokalisierung des Pulses.

Aus der EP 1 160 585 A2 ist ein Lasercanner bekannt, der nicht mit Zählern und Schwellbewertung arbeitet, sondern eine vollständige Historie des Abtastvorgangs speichert. Anschließend wird aus dieser Historie ein Störmaximum ausgewählt und mittels Polynominterpolation dessen Lage bestimmt.

Bei diesem Verfahren wird zwar der relevante Zeitpunkt der Laufzeitbestimmung zugrunde gelegt, nämlich die Lage desjenigen Maximums oder Peaks innerhalb des Empfangssignals, welcher dem Objekt zugeordnet wird. Damit wird gegenüber einer Schwellbewertung eine höhere Genauigkeit erzielt.

Die Lage kann aber nur dann richtig bestimmt werden, wenn die Pulsform verzerrungsfrei zur Verfügung steht. Ansonsten treten erneut Messfehler auf, weil die Peaklage nicht genau genug ermittelt wird. Die Annahme verzerrungsfreier Empfangssignale, ist jedoch in der Realität nicht erfüllt. Ursachen für Verzerrungen in der Analogelektronik im Empfangspfad des Laserscanners sind etwa begrenzte Bandbreiten, Rauschen oder begrenzte Dynamikbereiche.

Gerade die Dynamik ist ein besonders wichtiger Aspekt, weil der Dynamikbereich der Empfangssignalleistung, in dem ein Laserscanner arbeitet, sehr hoch ist. Dies liegt an unterschiedlichen Oberflächeneigenschaften und damit unterschiedlichem Remissionsverhalten, welches zwischen Extremen wie schwarzem Samt einerseits und einem Reflektor andererseits schwanken kann, oder auch an dem quadratischen Empfangssignalverlust mit dem Abstand, welcher sich beispielsweise an Objektkanten sehr abrupt ändern kann. Verfügbare Verstärker sind nicht in der Lage, Empfangssignale über diesen gesamten Dynamikbereich abzubilden. Die Folge sind übersteuerte Empfangssignale, deren Form bei Weitem nicht der verzerrungsfreien Signalform entspricht. Diese Verzerrungen werden deshalb über die unvermeidlichen Verluste in der Analogelektronik sogar teilweise absichtlich erzeugt, etwa um einen hohen Dynamikbereich durch logarithmische Kompression zu erreichen. Die Verzerrungen belasten die Messung deshalb mit systematischen und statistischen Fehlern, die in den herkömmlichen Verfahren nicht berücksichtigt werden.

Aus der US 2006/119833 A1 ist eine Vorrichtung und ein Verfahren zur Gewinnung geodätischer Entfernungsdaten bekannt. Dabei werden Lichtsignale in verschiedenen Frequenzen ausgesandt und damit die komplexe Frequenzantwortsfunktion eines Systems geschätzt, das aus der Messvorrichtung und der auszumessenden Szenerie besteht. Mittels der Antwortsfunktion wird dann die Lichtlaufzeit und hieraus die Entfernung bestimmt. Das System kann die Entfernung zu mehreren Objekten und unter Störeinflüssen etwa durch Schnee und Regen auflösen.

In der EP 1 291 673 wird ein Laserscanner offenbart, der Entfernungen nach einem Pulslaufzeitverfahren misst. Um Messfehler durch Übersteuerungen der Empfangspulse zu korrigieren, wird die Breite des Anteils der Empfangspulse oberhalb einer Komparatorschwelle gemessen. Mittels einer vorab empirisch bestimmten Korrekturkurve oder Korrekturtabelle wird dann aus dieser Breite ein Entfernungskorrekturwert ermittelt.

Es ist daher Aufgabe der Erfindung, die Messgenauigkeit in einem entfernungsmessenden Laserscanner, welcher den gesamten Verlauf des Empfangssignals auswerten kann, weiter zu verbessern.

Diese Aufgabe wird durch einen Laserscanner gemäß Anspruch 1 und ein Verfahren zur Erfassung von Entfernungen mittels Laserscanner gemäß Anspruch 10 gelöst.

Die Erfindung geht dabei von dem Prinzip aus, das Empfangssignal möglichst verzerrungsfrei auszuwerten, um die Peaklage hochgenau bestimmen zu können. Verzerrungen und Deformationen der Peakform sollen ausgeglichen werden, um die Messgenauigkeit zu erhöhen.

Dabei wird der gesamte Signalverlauf abgetastet und digitalisiert beziehungsweise gesampelt, so dass eine kontinuierliche Information für die Auswertung in digitaler Form verfügbar ist. Die Mehrzahl an Samplings je Peak ermöglicht eine genaue Zeitbestimmung, deren Genauigkeit deshalb weiter erhöht ist, weil die Peakform verzerrungsfrei ist. Als relevanter Peak wird dabei derjenige ausgewählt, der einem Reflex oder einer Remission von dem Objekt entspricht, dessen Entfernung gemessen werden soll.

Die Aufzeichnung des gesamten Empfangssignalverlaufs hat den Vorteil größerer Flexibilität, denn für Anpassungen und Ergänzung neuer Funktionen und Eigenschaften des Laserscanners ist dann oftmals keine Hardwareänderung erforderlich. So ist auch denkbar, die Parameter des Modells im Feld oder gar im Betrieb zu ändern. Da durch die Aufzeichnung quasi die Funktionalität eines Oszilloskops integriert ist, sind Tests und Fehlersuchen vor Ort erheblich vereinfacht, weil im Falle einer Fehlfunktion ein erster Blick in das Verhalten von Elektronik und Gesamtsystem geworfen werden kann.

Damit entstehen geringere Messfehler und eine höhere Genauigkeit. Der Laserscanner hat auch eine verbesserte Outdoorfähigkeit, da Störungen durch Schnee, Regen oder Nebel erkannt und korrigiert werden können. So kann beispielsweise angenommen werden, dass ein Peak in dem Empfangssignal, welcher trotz der erfindungsgemäßen Vorverarbeitung immer noch stark verzerrt ist, nicht der ausgewählte Peak sein darf. Bei dieser Prüfung kann das Vorwissen verwendet werden, wie ein ideales Sende- und Empfangssignal aussieht.

Die Erfindung ist besonders vorteilhaft in einem pulsbasierten Laserscanner, der also als Signal Pulse verwendet, somit Lichtpulse aussendet und einen oder mehrere aus diesem Sendepuls resultierende Empfangspulse auswertet. Für eine hohe zeitliche Genauigkeit sind die Pulse sehr schmal. Das Signal kann aber auch länger sein, solange die Situation quasistatisch bleibt und das Signal genügend Charakteristika für eine eindeutige zeitliche Zuordnung bietet, beispielsweise ein Doppelpuls oder eine um einen Grundwert herum nach oben und unten modulierte Signalform.

Die Empfangselektronik weist bevorzugt einen Verstärker auf, dessen Dynamikbereich kleiner ist als die erwartete maximale Dynamik des Empfangssignals. Dies ist wegen der einleitend diskutierten hohen Signaldynamik häufig erforderlich. Die erfindungsgemäße Vorverarbeitung ist in der Lage, die Verluste in dem Verstärker aufgrund von Übersteuerungen oder Kompression zumindest teilweise zu kompensieren, so dass der Laserscanner mit verfügbaren Verstärkern über einen großen Dynamikbereich genau arbeiten kann.

Vorteilhafterweise ist ein analoges oder digitales Filter vorgesehen, um das Empfangssignal unter zumindest weitgehendem Erhalt von dessen Signalform zu glätten. Digitale Filter können beispielsweise FIR- oder IIR-Filter sein (Finite/Infinite Impulse Response). Damit können statistische oder Rauscheffekte unterdrückt werden, welche das Auffinden und die Lagebestimmung des Peaks erschweren und damit die Messgenauigkeit beeinträchtigen würden.

Der Laserscanner ist bevorzugt dafür ausgebildet ist, das ausgesandte Lichtsignal in das Empfangssignal elektronisch oder optisch, insbesondere als Reflex von einer Frontscheibe des Laserscanners in das Empfangssignal einzukoppeln. Damit entfällt die Notwendigkeit, den Sendezeitpunkt pikosekundengenau mit dem Empfangssignal zu synchronisieren. Eine durch die Kopplung eingeführte Laufzeitdifferenz auf den elektronischen und/oder optischen Wegen ist konstant und lässt sich leicht kalibrieren.

Das Modell weist bevorzugt eine digitale Dekomprimierung und/oder eine Umkehrung der Übertragungsfunktion auf. Damit kann einerseits der hohe Dynamikbereich abgedeckt werden, ohne die Auswertung durch die mittels beispielsweise logarithmischer Kompression entstehende Verzerrung zu belasten. Andererseits lässt sich auch ganz allgemein Vorwissen über das Verhalten der Empfangselektronik berücksichtigen.

Das Modell bezieht vorteilhafterweise auch eine ideale oder erwartete Signalform des ausgesandten Lichtsignals und/oder des Empfangsignals ein. Damit lassen sich nicht nur Peaks aussortieren, welche nicht von einem interessierenden Objekt stammen können. Die Lagebestimmung ist auch viel genauer, wenn die volle oder wesentliche Information über die Peakform verwendet wird.

Die Auswertungseinheit ist bevorzugt dafür ausgebildet, die zeitliche Lage des Peaks mit höherer Auflösung zu bestimmen als diejenige des Analog/Digital-Wandlers, insbesondere durch Bestimmung des Maximums einer den erwarteten Peak repräsentierenden Pulsform, welche in das Empfangssignal gefittet wird. Die zeitliche Auflösung der Lagebestimmung und damit die Entfernungsmessung des Laserscanners wird damit nicht auf die Sampels beschränkt, sondern sie ist viel feiner (Subsample). Die Abtastrate erhältlicher Analog/Digitalwandler erreicht nicht die Pikosekundenauflösung, welche der gewünschten Entfernungsauflösung im Millimeterbereich entsprechen würde. Jedenfalls ist es kostengünstiger, auch mit einem etwas langsameren Analog/Digitalwandler arbeiten zu können, ohne dadurch die Messgenauigkeit zu stark zu begrenzen.

Die Auswertungseinheit ist bevorzugt dafür ausgebildet, den Peak nach einem oder mehreren der folgenden Kriterien auszuwählen:
- wähle den letzen Peak des Empfangssignals,
- wähle nicht den ersten Peak, außer es ist der einzige,
- wähle nur einen Peak, der einer Laufzeit innerhalb von vorgegebenen Entfernungskriterien entspricht,
- wähle denjenigen Peak, welcher vor oder nach der Vorverarbeitung am besten einer idealen erwarteten Empfangssignalform entspricht, wobei die Empfangsignalform anhand der Amplitude, Peakbreite, Symmetrie, Monotonie der Flanken und/oder Steigung der Flanken bewertet wird.

Der letzte Peak ist eine gute erste Annahme für den richtigen Peak, der also von dem Objekt stammt, dessen Entfernung zu vermessen ist. Handelt es sich dabei wie häufig um ein solides, optisch intransparentes Objekt, so können danach keine Empfangspulse mehr folgen. Der letzte Peak ist beispielsweise derjenige, der zuletzt vor Aussenden des nächsten Empfangssignals registriert wird. Der erste Peak dagegen hat die größten Chancen, zu einem Störobjekt zu gehören, sei es ein Regentropfen, eine Abdeckung oder die eigene Frontscheibe des Sensors. Ist der erste Peak der einzige, so ist dies entweder der gesuchte Messpeak, oder der Sensor ist ins Leere gerichtet. Dies kann anhand der ermittelten Entfernung unterschieden werden. Solche Entfernungskriterien können allgemein helfen, da ein Peak außerhalb eines spezifizierten Messbereichs, welcher auch eine Frontscheibe ausschließen kann, nicht interessant ist. Schließlich kann auch die Peakform ausgewertet werden. Damit können stark verzerrte Pulse, wie sie beispielsweise an Nebeltröpfchen entstehen, als Störungen ausgeschlossen werden.

Weitere Kriterien sind denkbar, etwa auch ein Zeitverhalten, weil Reflexe, die in sehr nahe aufeinanderfolgenden Scans stark variieren, Regentropfen oder ähnliche kleine schnell bewegliche und kleinflächige Störungen vermuten lassen. Welche Kriterien in welcher Kombination am besten funktionieren, hängt von der Anwendung ab. Bei einem Kollisionsschutz beispielsweise sollte der erste Peak meist gerade nicht ignoriert werden, da er zu einer Glasplatte gehören könnte, die zu entdecken gerade die primäre Aufgabe ist.

Die Auswertungseinheit ist weiterhin bevorzugt dafür ausgebildet, den ersten Peak mit einer erwarteten Empfangssignalform zu vergleichen, um die Durchlässigkeit einer Frontscheibe des Laserscanners zu bewerten. Die Frontscheibe ist dabei also so ausgebildet und ausgerichtet, dass immer ihr Teilreflex als erster Empfangspeak registriert wird. Gewöhnlich sucht man dies zu vermeiden, etwa durch Schrägstellen der Frontscheibe, oder durch eine Schwellbewertung des verhältnismäßig schwachen Frontscheibenreflexes zu ignorieren. In dieser Ausführungsform wird der sonst als Störung eingestufte Frontscheibenreflex gezielt genutzt, um rechtzeitig eine Wartungsanforderung ausgeben zu können oder die Auswertung an die verringerte Durchlässigkeit der Frontscheibe anzupassen.

Die Auswertungseinheit ist weiterhin bevorzugt dafür ausgebildet, aus der Form des Peaks, insbesondere dessen Amplitude und Breite, die Energie des Peaks und Remissionseigenschaften des Ortes zu bestimmen, an dem das Lichtsignal reflektiert oder remittiert wird. Damit kann der Laserscanner neben Entfernungsdaten noch weitere relevante Messdaten erheben. Zudem können die so bestimmten Remissionseigenschaften auch in das Modell und insbesondere die erwartete Empfangssignalform einfließen, um an diesem oder nahe benachbarten Scanpunkten die Entfernungsmessung weiter zu verbessern.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an den Vorrichtungsanspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine stark schematisierte Ansicht der Arbeitsweise eines entfernungsmes- senden Laserscanners und seines beispielhaften Sende- und Empfangs- signals;
- Fig. 2a: ein Blockschaltbild einer Ausführungsform des Empfangspfads eines erfin- dungsgemäßen entfernungsmessenden Laserscanners;
- Fig. 2b: ein Blockbeispiel einer weiteren Ausführungsform des Empfangspfads ei- nes erfindungsgemäßen entfernungsmessenden Laserscanners;
- Fig. 3: eine Darstellung eines ausgesandten Lichtsignals und eine Darstellung eines Empfangssignals mit eingekoppeltem Sendesignal und Mehrfach- echos;
- Fig. 4: eine Darstellung eines Empfangssignals bei einer Störung durch Nebel; und
- Fig. 5a,b: eine sehr vereinfachte Darstellung der Verzerrung des Empfangssignals durch die Analogelektronik und einer Rekonstruktion der Peakform trotz dieser Verzerrungen.

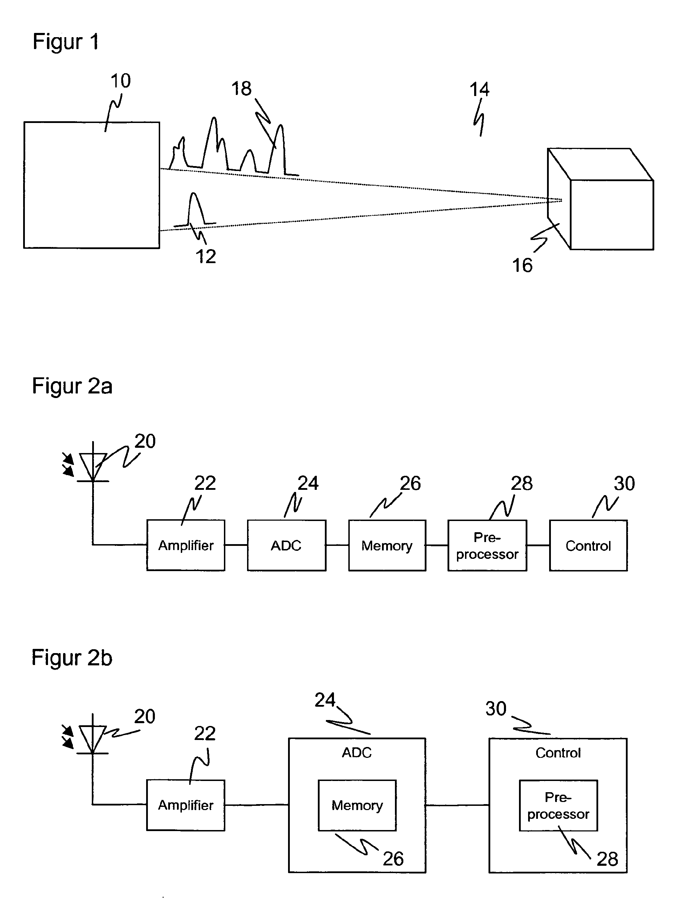

Figur 1 zeigt in sehr schematischer Vereinfachung einen Laserscanner 10, welcher mit einer Laserlichtquelle einen Lichtpuls 12 in einen Überwachungsbereich 14 aussendet. Der Lichtpuls 12 wird an einer Oberfläche 16 in dem Überwachungsbereich 14 reflektiert oder remittiert und als Empfangspuls 18 von dem Laserscanner 10 empfangen. Aus der Lichtlaufzeit zwischen Aussenden und Empfangen des Lichtpulses 12, 18 ermittelt der Laserscanner 10 den Abstand der Oberfläche 16.

Wie einleitend gesagt, kann alternativ zu einem Puls auch eine andere Signalform verwendet werden. Die Erfindung wird aber im Weiteren am Beispiel von Pulsen beschrieben. Die allgemeine Funktionsweise eines Laserscanners 10 einschließlich dessen Scanmechanismus, etwa durch einen Drehspiegel realisiert, Optiken im Sende- und Empfangskanal und dergleichen ist bekannt, beispielsweise aus der DE 43 40 756 A1 oder den einleitend bereits genannten DE 103 13 709 B4 oder EP 1 160 585 A2, und wird hier nicht näher erläutert.

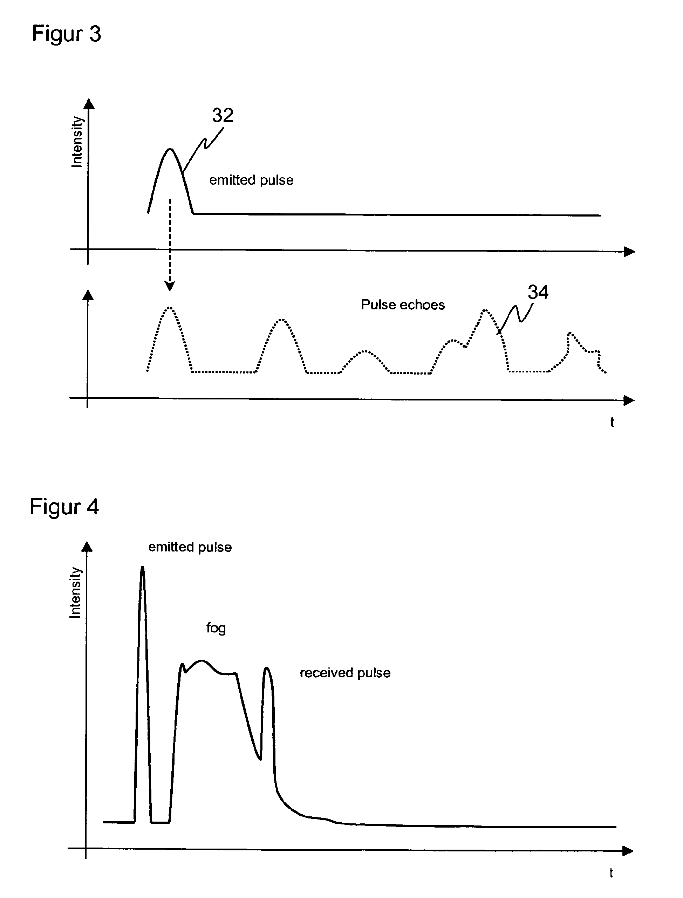

Der Empfangspuls 18 weist im Gegensatz zum Sendepuls 12 mehrere Peaks auf. Diese mehrfachen Peaks können durch nicht dargestellte teiltransparente Störungen im optischen Pfad zwischen Laserscanner 10 und Oberfläche 16 entstehen, wie später im Zusammenhang mit Figur 3 noch näher erläutert.

Figur 2a zeigt in einem Blockschaltbild den Empfangskanal des Laserscanners 10 gemäß einer Ausführungsform der Erfindung. Der Empfangspuls 18 wird von einem Lichtempfangselement 20, beispielsweise einer Photodiode, einer PIN-Diode (positive intrinsic negative diode), oder einer APD (Avalanche Photodiode) in ein elektrisches Signal beziehungsweise einen Photostrom I umgewandelt. Das Lichtempfangselement 20 könnte alternativ auch als Vielzahl, etwa als Matrix oder Zeile photoempfindlicher Elemente ausgebildet sein.

Das Lichtempfangselement 20 ist mit einem Verstärker 22 verbunden, der beispielsweise als Transimpedanzverstärker ausgebildet ist, um den Photostrom als verstärktes Spannungssignal weiterzuleiten. Wegen der hohen erwarteten Signaldynamik kann der Verstärker 22 logarithmisch ausgebildet sein. Mit dem Verstärker 22 ist ein Analog/Digital-Wandler 24 zum Digitalisieren des verstärkten Spannungssignals angeordnet, der das digitalisierte Empfangssignal in einem Speicher 26 ablegt. Dabei kann das Empfangssignal vollständig oder sukzessive mit sofortiger Weiterverarbeitung auch nur teilweise abgelegt werden. Der Analog/Digital-Wandler kann in einer Ausführungsform eine relativ geringe Samplingrate haben, und diese wird anschließend durch digitale Interpolation erhöht. Die Genauigkeit dieser digitalen Auflösungserhöhung wird die Realität häufig nicht exakt abbilden, so dass dies insgesamt dennoch zu einer geringeren Messgenauigkeit führt, die aber je nach Anwendung ausreichend sein kann.

Der in dieser Weise beschriebene analoge Teil des Empfangspfades kann auch anders aufgebaut sein, sofern nur erreicht wird, dass das empfangene Licht als zeitlich aufgelöstes digitalisiertes Signal verfügbar ist. So kann beispielsweise zusätzlich ein analoges Filter eingesetzt sein, um das Signal zu glätten, oder ein optischer Bandpass, welcher auf die Sendefrequenz des Laserscanners 10 abgestimmt ist.

Eine Vorverarbeitungseinheit 28 greift auf den Speicher 26 zu, um das Empfangssignal zu entzerren und die empfangenen Pulse zu rekonstruieren, wie im einzelnen weiter unten erklärt wird. Eine Steuerung 30 wählt nach ebenfalls später genannten Kriterien einen der Pulse aus, sofern dies nicht schon innerhalb der Vorverarbeitung geschieht, bestimmt die zeitliche Lage dieses Pulses und aus der so erhaltenen Lichtlaufzeit die Entfernung des Objekts 16.

Auch der digitale Teil des Empfangspfades kann alternativ anders ausgestaltet sein. Figur 2b zeigt eine weitere Ausführungsform, bei welcher der Speicher 26 in den Analog/Digital-Wandler 24 und die Vorverarbeitungseinheit 28 in die Steuerung 30 integriert ist. Weitere Varianten sind denkbar. Dabei ist die Implementierung in unterschiedlicher Hardware möglich, beispielsweise ein oder mehrere digitale Bausteine wie DSPs (Digital Signal Processor), FPGAs (Field Programmable Gate Array), ASICs (Application Specific Integrated Circuit) oder Mikroprozessoren.

Figur 3 zeigt in ihrem oberen Teil einen beispielhaft parabelförmigen Sendepuls 32 und in ihrem unteren Teil das digitalisierte Empfangssignal, wie es in dem Speicher 26 abgelegt wird. Es ist erfindungsgemäß vorgesehen, den gesamten Signalverlauf 34 des Empfangssignals wenigstens über einen erwarteten Messbereich zu digitalisieren und aufzuzeichnen. Damit steht der Vorverarbeitung 28 und der Auswertung in der Steuerung 30 eine im Wesentlichen kontinuierliche und vollständige Information über das Empfangssignal zur Verfügung.

Der Sendepuls 32 wird in den Signalverlauf 34 als zeitlicher Bezug eingekoppelt. Damit muss der Start der Aufzeichnung des Signalverlaufs 34 nicht pikosekundengenau mit dem Start des Sendepulses 32 synchronisiert werden. Die Koppelung kann elektronisch, etwa durch Addition zum Empfangssignal, aber auch optisch erfolgen, etwa indem eine Umlenkoptik vom Sender zum Empfänger 20 des Laserscanners 10 vorgesehen ist. Als Umlenkoptik kann hier auch eine Frontscheibe angesehen werden, an welcher der Sendepuls teilreflektiert wird.

Die weiteren Maxima oder Peaks des Signalverlaufs 34 sind beispielhafte Teilreflexionen oder -remissionen unterschiedlicher Amplitude und unterschiedlicher Formen. Verzerrungen können durch Übersteuerungen, Oberflächenbeschaffenheit, Oberflächengeometrie und dergleichen entstehen. Figur 4 etwa zeigt einen breit verschmierten Peak, der an Nebeltröpfchen entsteht. Weitere Ursachen für zusätzliche Peaks können beispielsweise Regentropfen oder Glasflächen einschließlich einer Frontscheibe des Laserscanners 10 sein.

In der Vorverarbeitungseinheit 28 und der Steuerung 30 wird nun der zu dem Objekt 16 gehörige Peak innerhalb des Signalsverlaufs 34 identifiziert, rekonstruiert und dessen zeitliche Lage präzise bestimmt. Dabei fließt Vorwissen über das Verhalten der Empfangselektronik sowie die ideale Sende- und Empfangspulsform ein, um unerwünschte Deformationen zu beseitigen.

Zunächst wird zur Minimierung statistischer Fehler das Signal digital gefiltert, beispielsweise mit einem FIR- oder einem IIR-Filter. Die Filterfunktion ist dabei so angepasst, dass das Rauschen möglichst stark gedämpft wird, die Pulsform selbst jedoch möglichst unverändert bleibt.

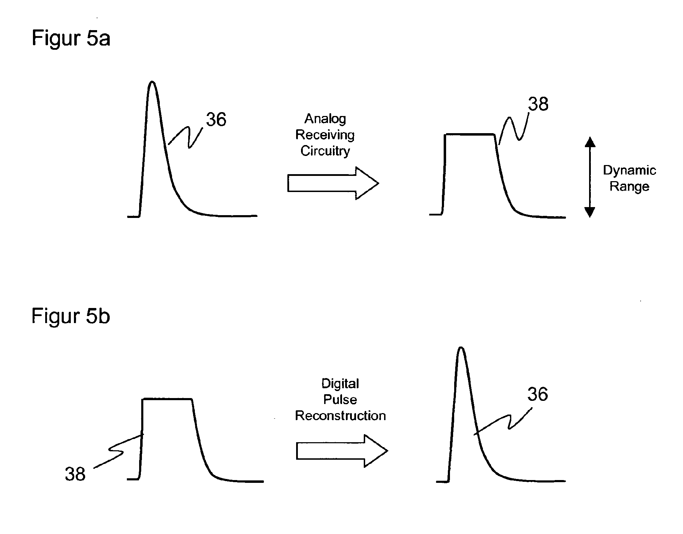

Das Grundprinzip der Peakrekonstruktion zeigt Figur 5. Wie in Figur 5a dargestellt, wird ein idealer Empfangspuls 36 von der Empfangselektronik zu einem wesentlich breiteren Empfangspuls 38 verzerrt. Mögliche Gründe hierfür sind eine Übersteuerung des Verstärkers 22, allgemeiner eine zu geringe Bandbreite in der analogen Empfangselektronik des Empfangspfads vor dem Analog/Digitalwandler 24 oder eine logarithmische Verstärkung, um einen größeren Dynamikbereich abbilden zu können.

Wie Figur 5b schematisch zeigt, sollen in der Vorverarbeitungseinheit 28 oder der Steuerung 30 diese Einflüsse wieder so weit wie möglich rückgängig gemacht werden. Dabei kann auch aus einem verbreiterten Empfangssignal ein schmalerer und damit präziser lokalisierbarer Peak rekonstruiert werden. Dazu wird ein Modell auf Basis der beobachteten Wirkungen, nämlich der Verzerrungen der Empfangspulse 38 aufgestellt, um auf die zugrunde liegenden Ursachen zurückzuschließen. Verfügt man also über ein Vorwissen darüber, wie die Analogelektronik Signale verzerrt, so können mit Hilfe dieses Modells die verzerrenden Störeinflüsse umgekehrt werden, so dass nach der Vorverarbeitung der unverzerrte Empfangspuls 36 gewonnen werden kann. Dies ist in der Praxis selbstverständlich nicht immer vollständig erreichbar. Für die Verzerrung des Empfangsimpulses können mehrere Prozesse verantwortlich sein, die eine lineare und nichtlineare Natur haben können. Das Modell sollte dies und die Reihenfolge der Operationen einbeziehen.

Eine beispielhafte Operation des Modells beruht auf einer Übertragungsfunktion der Empfangselektronik und insbesondere des Verstärkers 22. Dazu wird vorab die Übertragungsfunktion berechnet oder vermessen und dann in der Vorverarbeitung umgekehrt. Im linearen Fall kann die Verzerrung als Faltung des Sendesignals als "Verzerrtes Signal = Empfänger gefaltet mit Peak" beschrieben und dementsprechend durch Entfaltung umgekehrt werden.

Eine andere beispielhafte Operation ist digitale Dekompression. Ist etwa die Amplitude des Signals analog komprimiert und lässt sich dies durch eine Funktion wie einen Logarithmus beschreiben, so kann dies digital umgekehrt werden, in diesem Fall durch Anwendung der entsprechenden Exponentialfunktion.

Die Identifizierung und Auswahl des maßgeblichen Peaks kann sowohl vor wie nach der Rekonstruktion des Signalverlaufs erfolgen. Der eingekoppelte Sendepuls wird hier als nullter Peak behandelt und bleibt für die Auswahl grundsätzlich ausgeschlossen. Manche Auswahlkriterien hängen dabei von der Anwendung ab. Denkbare Regeln sind, den letzten Peak bevorzugt auszuwählen, den ersten Peak bevorzugt auszuschließen, Peaks nur innerhalb eines Messbereichs oder nur solche Peaks zu berücksichtigen, deren Form möglichst genau der idealen Empfangspulsform entspricht. Diese erwartete Empfangspulsform hängt natürlich von dem ausgesandten Lichtpuls ab. Das letztgenannte Kriterium würde etwa den Nebelpeak der Figur 4 ausschließen.

In den ausgewählten Peak, oder in Kandidaten für den auszuwählenden Peak, die beispielsweise durch ein Schwellenkriterium selektiert sind, werden dann Funktionen gefittet, welche der erwarteten Empfangspulsform entsprechen. Einfache Auswertung ermöglichen parabelförmige Pulse, denn hier genügen bereits drei Samplepunkte für den Polynomfit. Kompliziertere Pulsformen wie bekannte verbleibende Deformationen der Peaks in dem Empfangssignal können in der zu fittenden Funktion berücksichtigt werden. Die derart bestimmte Peaklage ist nicht auf das Gitter der Samplepunkte beschränkt, also die Samplerate des Analog/Digital-Wandlers 24, so dass die Genauigkeit im Subsamplebereich liegt. Alternativ zu einem vollständigen Funktionsfit können auch Kriterien wie Lage des Maximums, von Wendepunkten, steigende und fallende Flanken, Symmetrien, die Pulsbreite und andere herangezogen werden. Weitere Möglichkeiten sind Schwerpunktsberechnungen oder die Rekonstruktion eines Sinussignals aus mehreren Samples.

Alternativ zu einem Funktionsfit kann auch lediglich nach einem entsprechend gerichteten Vorzeichenwechsel der Differenz zwischen zwei aufeinanderfolgenden Samplings gesucht werden, welche ein Maximum anzeigen. Auch ist möglich, die Schwellenkriterien für Peakkandidaten anzupassen, beispielsweise um den relativ schwachen Reflex einer Frontscheibe aufzulösen.

Schließlich ist auch denkbar, dass der Laserscanner 10 mehrere Entfernungswerte ausgibt, welche verschiedenen Peaks entsprechen, und die weitere Verarbeitung einer übergeordneten oder nachgelagerten Auswertung überlässt.

Durch die Vorverarbeitung basierend auf einer Modellierung des Empfangspfades kann die Messgenauigkeit erhöht werden. Dabei ist darüber hinaus auch, gerade bei Anwendung unterschiedlicher Modelle, in einigen Fällen die Bestimmung der verbleibenden Messfehler aus den Modellparametern denkbar, so dass Gewissheit darüber herrscht, ob die Messgenauigkeit die Anforderungen der Anwendung erfüllt. Der Laserscanner 10 ist dann in der Lage, seine fehlende Einsatzbereitschaft zumindest anzuzeigen, statt die Anwendung auf ungenaue Messwerte vertrauen zu lassen.

## Patentansprüche

1. Pulsbasierter entfernungsmessender Laserscanner (10) mit einer Laserlichtquelle zum Aussenden eines Lichtsignals (12, 32) mit einem Lichtpuls, einem Lichtempfangselement (20) zum Empfang eines Empfangssignals (18, 34) mit mindestens einem aus dem gesendeten Lichtpuls resultierenden Peak sowie einem Analog-Digital-Wandler (24) und einem Speicher (26), um das Empfangssignal (34) zu digitalisieren und aufzuzeichnen, so dass eine kontinuierliche Information über das Empfangssignal (18, 34) mit einer Mehrzahl von Abtastpunkten je Peak in digitaler Form verfügbar ist, wobei der Laserscanner (10) weiterhin eine Auswertungseinheit (30) aufweist, die für die Auswahl eines Peaks des Empfangssignals (34) und die Ermittlung von Entfernungen aus einer Laufzeit des Lichtsignals anhand des Peaks ausgebildet ist, indem in den ausgewählten Peak eine Funktion gefittet wird, welche einer erwarteten Pulsform entspricht,
**gekennzeichnet durch**
eine Vorverarbeitungseinheit (28), welche dafür ausgebildet ist, Verzerrungen von Form und/oder Lage des Peaks unter Einbeziehung eines Modells zumindest teilweise zu kompensieren, wobei das Modell mit einer Übertragungsfunktion einer Empfangselektronik und/oder Vorwissen über eine Verstärkung der Empfangselektronik des Lichtempfangselements (20) kalibriert ist und der Peak in der Vorverarbeitungseinheit (28) zur genaueren Laufzeitermittlung mittels einer Umkehrung der Übertragungsfunktion oder digitaler Dekomprimierung rekonstruierbar ist.

2. Laserscanner (10) nach Anspruch 1,
wobei die Empfangselektronik einen Verstärker (22) aufweist, dessen Dynamikbereich kleiner ist als die erwartete maximale Dynamik des Empfangssignals (18).

3. Laserscanner (10) nach Anspruch 1 oder 2,
wobei ein analoges oder digitales Filter vorgesehen ist, um das Empfangssignal (18, 34) unter zumindest weitgehendem Erhalt von dessen Signalform zu glätten.

4. Laserscanner (10) nach einem der vorhergehenden Ansprüche,
der dafür ausgebildet ist, das ausgesandte Lichtsignal (12, 32) in das Empfangssignal (18, 34) elektronisch oder optisch, insbesondere als Reflex von einer Frontscheibe des Laserscanners (10) in das Empfangssignal (18, 34) einzukoppeln.

5. Laserscanner (10) nach einem der vorhergehenden Ansprüche,
wobei das Modell eine ideale oder erwartete Signalform des ausgesandten Lichtsignals (12) und/oder des Empfangsignals (18) einbezieht.

6. Laserscanner (10) nach einem der vorhergehenden Ansprüche,
wobei die Auswertungseinheit (30) dafür ausgebildet ist, die zeitliche Lage des Peaks mit höherer Auflösung zu bestimmen als diejenige des Analog/DigitalWandlers (24), insbesondere durch Bestimmung des Maximums einer den erwarteten Peak repräsentierenden Pulsform, welche in das Empfangssignal (34) gefittet wird.

7. Laserscanner (10) nach einem der vorhergehenden Ansprüche,
wobei die Auswertungseinheit (30) dafür ausgebildet ist, den Peak nach einem oder mehreren der folgenden Kriterien auszuwählen:
- wähle den letzen Peak des Empfangssignals (34),
- wähle nicht den ersten Peak, außer es ist der einzige,
- wähle nur einen Peak, der einer Laufzeit innerhalb von vorgegebenen Entfernungskriterien entspricht,
- wähle denjenigen Peak, welcher vor oder nach der Vorverarbeitung am besten einer idealen erwarteten Empfangssignalform entspricht, wobei die Empfangsignalform anhand der Amplitude, Peakbreite, Symmetrie, Monotonie der Flanken und/oder Steigung der Flanken bewertet wird.

8. Laserscanner (10) nach einem der vorhergehenden Ansprüche,
wobei die Auswertungseinheit (30) dafür ausgebildet ist, den ersten Peak mit einer erwarteten Empfangssignalform zu vergleichen, um die Durchlässigkeit einer Frontscheibe des Laserscanners (10) zu bewerten.

9. Laserscanner (10) nach einem der vorhergehenden Ansprüche,
wobei die Auswertungseinheit (30) dafür ausgebildet ist, aus der Form des Peaks, insbesondere dessen Amplitude und Breite, die Energie des Peaks und Remissionseigenschaften des Ortes (16) zu bestimmen, an dem das Lichtsignal reflektiert oder remittiert wird.

10. Verfahren zur Erfassung von Entfernungen mittels eines pulsbasierten Laserscanners (10) anhand einer Lichtlaufzeit zwischen Aussenden eines Lichtsignals (12, 32) mit einem Lichtpuls und Empfangen, Digitalisieren und Aufzeichnen eines Empfangssignals (18, 34) mit mindestens einem aus dem gesendeten Lichtpuls resultierenden Peak, so dass eine kontinuierliche Information über das Empfangssignal (18, 34) mit einer Mehrzahl von Abtastpunkten je Peak in digitaler Form verfügbar ist, wobei ein Peak des aufgezeichneten Empfangssignals (34) ausgewählt und der Bestimmung der Lichtlaufzeit zugrunde gelegt wird, indem in den ausgewählten Peak eine Funktion gefittet wird, welche einer erwarteten Pulsform entspricht,
**dadurch gekennzeichnet,**
**dass** das aufgezeichnete Empfangssignal (34) vorverarbeitet wird, indem Verzerrungen von Form und/oder Lage des Peaks unter Einbeziehung eines Modells zumindest teilweise kompensiert werden, wobei das Modell mit einer Übertragungsfunktion einer Empfangselektronik und/oder Vorwissen über eine Verstärkung der Empfangselektronik für den Empfang des Lichtsignals kalibriert und der Peak mit Hilfe des Modells zur genaueren Laufzeitermittlung mittels einer Umkehrung der Übertragungsfunktion oder digitaler Dekomprimierung rekonstruiert wird.

11. Verfahren nach Anspruch 10,
wobei das ausgesandte Lichtsignal (12, 32) in das Empfangssignal (18, 34) elektronisch oder optisch, insbesondere als Reflex von einer Frontscheibe des Laserscanners (10) in das Empfangssignal eingekoppelt wird.

12. Verfahren nach Anspruch 10 oder 11,
wobei die zeitliche Lage des Peaks mit höherer Auflösung bestimmt wird als die durch die Samplingrate des digitalisierten Empfangssignals gegebene Auflösung, insbesondere durch Bestimmung des Maximums einer den erwarteten Peak repräsentierenden Pulsform, welche in das Empfangssignal (34) gefittet wird.

13. Verfahren nach einem der Ansprüche 10 bis 12,
wobei der Peak nach einem oder mehreren der folgenden Kriterien ausgewählt wird:
- wähle den letzen Peak des Empfangssignals (34),
- wähle nicht den ersten Peak, außer es ist der einzige,
- wähle nur einen Peak, der einer Laufzeit innerhalb von vorgegebenen Entfernungskriterien entspricht,
- wähle denjenigen Peak, welcher vor oder nach der Vorverarbeitung am besten einer idealen erwarteten Empfangssignalform entspricht, wobei die Empfangsignalform anhand der Amplitude, Peakbreite, Symmetrie, Monotonie der Flanken und/oder Steigung der Flanken bewertet wird.

14. Verfahren nach einem der Ansprüche 10 bis 13,
wobei die Durchlässigkeit einer Frontscheibe des Laserscanners (10) bewertet wird, indem der erste Peak mit einer erwarteten Empfangssignalform verglichen wird.

## Claims

1. A pulse-based distance measuring laser scanner (10) having a laser light source for transmitting a light signal (12, 32) with a light pulse, a light reception element (20) for receiving a reception signal (18, 34) with at least one peak resulting from the transmitted light pulse, as well as an analog-digital converter (24) and a memory (26) to digitize and record the reception signal (34), so that continuous information about the reception signal (18, 34) with a plurality of sampling points per peak is available in digital form, wherein the laser scanner (10) further comprises an evaluation unit (30) which is configured for the selection of a peak of the reception signal (34) and the determination of distances from a time of flight of the light signal based on the peak by means of fitting a function which corresponds to an expected pulse shape into the selected peak,
**characterized by**
a pre-processing unit (28) which is configured to at least partially compensate distortions of shape and/or position of the peak based on a model, wherein the model is calibrated with a transfer function of reception electronics and/or prior knowledge about an amplification electronics of the light reception element (20), and wherein the peak can be reconstructed in the pre-processing unit (28) for a more precise determination of the time of flight by means of inverting the transfer function or by digital decompression.

2. The laser scanner (10) according to claim 1,
wherein the reception electronics comprise an amplifier (22) whose dynamic range is smaller than the expected maximum dynamic of the reception signal (18).

3. The laser scanner (10) according to claim 1 or 2,
wherein an analog or digital filter is provided to smoothen the reception signal (18, 34) while at least largely maintaining its signal shape.

4. The laser scanner (10) according to any of the preceding claims,
which is configured to electronically or optically couple the transmitted light signal (12, 32) into the reception signal (18, 34), in particular as a reflex from a front screen of the laser scanner (10).

5. The laser scanner (10) according to any of the preceding claims,
wherein the model includes an ideal or an expected signal shape of the transmitted light signal (12) and/or of the reception signal (18).

6. The laser scanner (10) according to any of the preceding claims,
wherein the evaluation unit (30) is configured to determine the temporal position of the peak with a higher resolution than that of the analog-digital converter (24), in particular by determining the maximum of a pulse shape representing the expected peak which is fitted into the reception signal (34).

7. The laser scanner (10) according to any of the preceding claims,
wherein the evaluation unit (30) is configured to select the peak according to one or more of the following criteria:
- select the last peak of the reception signal (34),
- do not select the first peak, unless it is the only one,
- select only a peak that corresponds to a time of flight within preset distance criteria;
- select the peak which, before or after the pre-processing, is the best match for an ideal expected reception signal shape, wherein the reception signal shape is evaluated based on the amplitude, peak width, symmetry, monotony of the edges and/or a slope of the edges.

8. The laser scanner (10) according to any of the preceding claims,
wherein the evaluation unit (30) is configured to compare the first peak with an expected reception signal shape to evaluate the transmissivity of a front screen of the laser scanner (10).

9. The laser scanner (10) according to any of the preceding claims,
wherein the evaluation unit (30) is configured to determine the energy of the peak and remission properties of the location (16) where the light signal is reflected or remitted from the shape of the peak, in particular its amplitude and width.

10. A method for detecting distances by means of a pulse-based laser scanner (10) from a time of flight between transmission of a light signal (12, 32) having a light pulse and reception, digitizing, and recording of a reception signal (18, 34) having at least one peak resulting from the transmitted light pulse, so that continuous information about the reception signal (18, 34) with a plurality of sampling points per peak is available in digital form, wherein a peak of the recorded reception signal (34) is selected and the determination of the time of flight is based thereon by means of fitting a function which corresponds to an expected pulse shape into the selected peak,
**characterized in that**
the recorded reception signal (34) is pre-processed by at least partially compensating distortions of shape and/or position of the peak based on a model, wherein the model is calibrated with a transfer function of reception electronics and/or prior knowledge about an amplification of the reception electronics for the reception of the light signal, and wherein the peak is reconstructed based on the model for a more precise determination of the time of flight by means of inverting the transfer function or by digital decompression.

11. The method according to claim 10,
wherein the transmitted light signal (12, 32) is electronically or optically coupled into the reception signal (18, 34), in particular as a reflex from a front screen of the laser scanner (10).

12. The method according to claim 10 or 11,
wherein the temporal position of the peak is determined with a higher resolution than the resolution given by the sampling rate of the digitized reception signal, in particular by determining the maximum of a pulse shape representing the expected peak which is fitted into the reception signal (34).

13. The method according to any of claims 10 to 12,
wherein the peak is selected according to one or more of the following criteria:
- select the last peak of the reception signal (34),
- do not select the first peak, unless it is the only one,
- select only a peak that corresponds to a time of flight within preset distance criteria;
- select the peak which, before or after the pre-processing, is the best match for an ideal expected reception signal shape, wherein the reception signal shape is evaluated based on the amplitude, peak width, symmetry, monotony of the edges and/or a slope of the edges.

14. The method according to any of claims 10 to 13,
wherein the transmissivity of a front screen of the laser scanner (10) is evaluated by comparing the first peak with an expected reception signal shape.

## Revendications

1. Scanneur à laser (10) assurant une mesure d'éloignement en se basant sur des impulsions, comprenant une source de lumière laser pour émettre un signal lumineux (12, 32) avec une impulsion lumineuse, un élément récepteur de lumière (20) pour recevoir un signal reçu (18, 34) avec au moins un pointe résultant de l'impulsion lumineuse émise, de même qu'un convertisseur analogique/numérique (24) et une mémoire (26) pour numériser le signal reçu (34) et l'enregistrer, de sorte que l'on dispose d'une information continue sur le signal reçu (18, 34) avec une pluralité de points de palpage à chaque pointe en forme numérique, dans lequel le scanneur à laser (10) comprend encore une unité d'évaluation (30) qui est réalisée pour sélectionner une pointe du signal reçu (34) et pour déterminer des éloignements à partir d'un temps de parcours du signal lumineux en se rapportant à la pointe, par adaptation d'une fonction à la pointe sélectionnée, qui correspond à une forme d'impulsion attendue,
**caractérisé par**
une unité de prétraitement (28) qui est réalisée pour compenser au moins partiellement des distorsions de forme et/ou de situation de la pointe en se référant à un modèle, ledit modèle étant calibré avec une fonction de transfert d'une électronique de réception et/ou en connaissant préalablement une amplification de l'électronique de réception de l'élément récepteur de lumière (20) et, pour une détermination plus exacte du temps de parcours, la pointe peut être reconstruite dans l'unité de prétraitement (28) au moyen d'une inversion de la fonction de transfert ou au moyen d'une décompression numérique.

2. Scanneur à laser (10) selon la revendication 1, dans lequel l'électronique de réception comprend un amplificateur (22) dont la plage dynamique est inférieure à la dynamique maximum attendue du signal reçu (18).

3. Scanneur à laser (10) selon la revendication 1 ou 2,
dans lequel il est prévu un filtre analogique ou numérique afin de lisser le signal reçu (18, 34) en conservant au moins largement sa forme.

4. Scanneur à laser (10) selon l'une des revendications précédentes, réalisé pour coupler le signal lumineux émis (12, 32) dans le signal reçu (18, 34) de manière électronique ou optique, en particulier comme réflexion d'une vitre frontale du scanneur à laser (10) dans le signal reçu (18, 34).

5. Scanneur à laser (10) selon l'une des revendications précédentes, dans lequel le modèle intègre une forme idéale ou attendue du signal lumineux émis (12) et/ou du signal reçu (18).

6. Scanneur à laser (10) selon l'une des revendications précédentes, dans lequel l'unité d'évaluation (30) est réalisée pour déterminer la situation temporelle de la pointe avec une résolution plus élevée que celle du convertisseur analogique/numérique (24), en particulier par détermination du maximum d'une forme d'impulsion qui représente la pointe attendue, laquelle est adaptée dans le signal reçu (34).

7. Scanneur à laser (10) selon l'une des revendications précédentes, dans lequel l'unité d'évaluation (30) est réalisée pour sélectionner la pointe selon l'un ou plusieurs des critères suivants :
- sélectionner la dernière pointe du signal reçu (34),
- ne pas sélectionner la première pointe, sauf si elle est unique,
- sélectionner une seule pointe qui correspond à un temps de parcours à l'intérieur de critères d'éloignement prédéterminés,
- sélectionner la pointe qui correspond, avant ou après le prétraitement, au mieux à une forme attendue idéale du signal reçu, ladite forme du signal reçu étant évaluée au moyen de l'amplitude, de la largeur de pointe, de la symétrie, de la monotonie des flancs et/ou de la pente des flancs.

8. Scanneur à laser (10) selon l'une des revendications précédentes, dans lequel l'unité d'évaluation (30) est réalisée pour comparer la première pointe avec une forme attendue du signal reçu, afin d'évaluer la transparence d'une vitre frontale du scanneur à laser (10).

9. Scanneur à laser (10) selon l'une des revendications précédentes, dans lequel l'unité d'évaluation (30) est réalisée pour déterminer, à partir de la forme de la pointe, en particulier de son amplitude et de sa largeur, l'énergie de la pointe et les propriétés de réémission de l'emplacement (16) auquel le signal lumineux est réfléchi ou réémis.

10. Procédé pour la détermination d'éloignements au moyen d'un scanneur à laser (10) en se basant sur des impulsions au moyen d'un temps de parcours de la lumière entre l'émission d'un signal lumineux (12, 32) avec une impulsion lumineuse et sa réception, numérisation et enregistrement d'un signal reçu (18, 34) avec au moins une pointe résultant de l'impulsion lumineuse émise, de sorte que l'on dispose d'une information continue sur le signal reçu (18, 34) avec une pluralité de points de palpage pour chaque pointe sous forme numérique, dans lequel une pointe du signal reçu enregistré (34) est sélectionnée et est utilisée pour la détermination du temps de parcours de la lumière, en adaptant à la pointe sélectionnée une fonction qui correspond à une forme d'impulsion attendue,
**caractérisé en ce que**
le signal reçu enregistré (34) est prétraité en compensant des distorsions de forme et/ou de situation de la pointe en intégrant un modèle, ledit modèle étant calibré avec une fonction de transfert d'une unité électronique de réception et/ou en connaissant une amplification de l'unité électronique de réception pour la réception du signal lumineux, et l'on reconstruit la pointe avec l'aide du modèle pour une détermination plus exacte du temps de parcours, au moyen d'une inversion de la fonction de transfert ou au moyen d'une décompression numérique.

11. Procédé selon la revendication 10,
dans lequel le signal lumineux émis (12, 32) est couplé dans le signal reçu (18, 34) de manière électronique ou optique, en particulier sous la forme d'une réflexion depuis une vitre frontale du scanneur à laser (10) dans le signal reçu.

12. Procédé selon la revendication 10 ou 11,
dans lequel la position temporelle de la pointe est déterminée avec une résolution plus élevée que la résolution donnée par la cadence d'échantillonnage du signal reçu numérisé, en particulier par détermination du maximum d'une forme d'impulsion représentant la pointe attendue, laquelle est adaptée dans le signal reçu (34).

13. Procédé selon l'une des revendications 10 à 12,
dans lequel la pointe est sélectionnée selon l'un ou plusieurs des critères suivants :
- sélectionner la dernière pointe du signal reçu (34),
- ne pas sélectionner la première pointe, sauf si elle est unique,
- sélectionner une seule pointe qui correspond à un temps de parcours à l'intérieur de critères d'éloignement prédéterminés,
- sélectionner la pointe qui correspond, avant ou après le prétraitement, au mieux à une forme attendue idéale du signal reçu, ladite forme du signal reçu étant évaluée au moyen de l'amplitude, de la largeur de pointe, de la symétrie, de la monotonie des flancs et/ou de la pente des flancs.

14. Procédé selon l'une des revendications 10 à 13,
dans lequel on évalue la transparence d'une vitre frontale du scanneur à laser (10) en comparant la première pointe avec une forme attendue du signal reçu.
